# EUROPEAN PATENT APPLICATION

(11) **EP 4 521 366 A1**
(43) Date of publication of application: **12.03.2025**
(21) Application number: 23306497.1
(22) Date of filing: 08.09.2023
(51) Int. Cl.: G06V 30/14, G06V 30/40

(54) **NOTETAKING IN ELECTRONIC DOCUMENTS**

(71) Applicant: MyScript, 44339 Nantes Cedex 3 (FR)
(72) Inventor: LIOUMBIS, Alexandros, 44339 NANTES (FR)
(74) Representative: RVDB Nantes

(57) **Abstract**

The invention relates to a computer-implemented method and a computing device (DV1) for processing an electronic document (FL1). The method may comprise: displaying a handwritten text block (BL1) of the electronic document; detecting a user selection of a first portion (PR1) of the handwritten text block (BL1); recognizing as text content the selected first portion (PR1) of the handwritten text block and a second portion (PR2), including handwritten text other than the selected first portion, of the handwritten text block (BL1) by handwriting recognition based on said handwritten text block; and obtaining first information (IF1) related to the recognised text (TX1) of the first portion (PR1) of the handwritten text block as an output of a trained predictive model (ML1) using the recognised text (TX2) of the second portion (PR2) of the handwritten text bock as context of the recognised text (TX1) of the first portion.

## Description

### Technical field

The present disclosure relates generally to the field of processing handwritten content in an electronic document and concerns in particular computing devices and methods for obtaining and managing relevant information related to handwritten text within an electronic document.

### Background

In an increasingly digital world, the way we gather, process, and retain information has undergone a substantial transformation. The practice of notetaking in particular has experienced a notable shift as it adjusts to electronic documents, notably due to the advancements in text handwriting recognition technology. The integration of artificial intelligence (Al) based technologies has also opened up new horizons for capturing, organizing, and managing information in electronic documents.

However, alongside these advancements, there exists a set of technical problems and limitations in the field of management of electronic documents that deserve careful consideration.

While the emergence of Al-driven technologies offer new features that enhance productivity, accessibility, and knowledge management in notetaking, the existing solutions still face challenges in terms of ergonomic, accuracy and reliability.

In handwriting notetaking applications, it is usually possible to perform some level of user interaction with handwritten content on a computing device. Conventionally, such applications are however limited in their capabilities to handle interactive functions and typically constrain users to adopt behaviours or accept compromises which do not reflect the user's original intent. Further, the results of such functions are not always satisfactory in terms of accuracy and reliability, thereby limiting the user experience.

There is thus a need for a solution allowing for more efficient interactions of a user with handwritten content in an electronic document. In particular, enhanced management of handwritten content is needed for improving the user experience, for instance in a notetaking application.

### Summary of the invention

An object of the present invention is to solve at least one of the disadvantages or deficiencies of the technological background.

Another object of the present invention is to allow for more efficient interactions of a user with handwritten content in an electronic document.

Another object of the present invention is to achieve an accurate and reliable management of handwritten content in an electronic document, for instance when using a notetaking application.

The examples of the present invention that are described herein below provide computing devices, methods and corresponding computer programs for processing an electronic document, and in particular for processing handwritten content within such an electronic document.

According to a first aspect, the invention provides a computer-implemented method for processing an electronic document, comprising:
- displaying a handwritten text block contained in the electronic document;
- detecting a user selection, within the electronic document, of a first portion of the handwritten text block;
- recognizing as text content the selected first portion of the handwritten text block and a second portion, including handwritten text other than the selected first portion, of the handwritten text block by handwriting recognition based on said handwritten text block; and
- obtaining first information related to the recognised text of the first portion of the handwritten text block as an output of a trained predictive model using the recognised text of the second portion of the handwritten text bock as context of the recognised text of the first portion.

In a particular embodiment, the selected first portion of the handwritten text block is user selected in response to a user gesture.

In a particular embodiment, said detecting a user selection comprises:
- determining a selection area within the electronic document in response to said user gesture; and
- selecting, as the first portion of the handwritten text block, each handwritten character of the handwritten text block at least partially contained within the selection area.

In a particular embodiment, said recognizing as text content the selected first portion of the handwritten text content and a second portion comprises:
- selecting, as part of the second portion of the handwritten text block, at least one neighbouring handwritten word based on its proximity within the handwritten text block with respect to the first portion of the handwritten text block.

In a particular embodiment, the handwritten text block comprises a plurality of handwritten text lines, each handwritten text line comprising at least one handwritten word,
wherein said at least one neighbouring handwritten word belongs to a same handwritten text line as the first portion of the handwritten text block.

In a particular embodiment, the method comprises:
- selecting, as the second portion of the handwritten text block, each handwritten text content within a same handwritten text line as the first portion of the handwritten text block.

In a particular embodiment, the method comprises:
- selecting the entire handwritten text block as the second portion.

In a particular embodiment, the first information comprises a first explanation of said recognised text.

In a particular embodiment, said obtaining first information comprises:
- generating a first prompt requesting for a first explanation of the recognised text of the first portion using the recognised text of the second portion as context for said explanation;
- transmitting said first prompt to the trained predictive model; and
- receiving, as output of the trained predictive model, the first explanation generated in accordance with said first prompt.

In a particular embodiment, the method comprises transmitting, to the trained predictive model, as the second portion of the handwritten text block, a sequence of groups of at least one word of the handwritten text block, wherein the groups of said sequence are hierarchically associated so that each group comprises at least the subsequent group of the sequence.

In a particular embodiment, the method comprises:
- selecting, as part of the second portion of the handwritten text block, at least two different groups of at least one handwritten word in the handwritten text block;
- allocating to respectively each group of the second portion a weight representative of its relevance as context; and
- transmitting to the trained predictive model, as part of the second portion of the handwritten text block, said at least two groups along with their respective weights;
wherein said first information is generated by the trained predictive model using as hierarchical context said at least two groups in accordance with their respective weights.

In a particular embodiment, the closer is located a selected group in the handwritten text block relative to the first portion, the higher is the respective weight allocated to said selected group.

In a particular embodiment, the method comprises:
- Selecting, as part of the second portion of the handwritten text block, a first group of at least one handwritten character, other than the selected first portion, defining a first level of context, said first group belonging to a same handwritten text line as the first portion;
- Selecting, as part of the second portion of the handwritten text block, a second group of at least one second handwritten character, other than the selected first portion, defining a second level of context, said second group comprising the entire handwritten text block;
- allocating first and second weights to respectively the first and second groups, wherein the first weight defines a higher relevance as context than the second weight;
- transmitting to the trained predictive model, as part of the second portion of the handwritten text block, said first and second groups along with their respective first and second weights;
wherein said first information is generated by the trained predictive model using as hierarchical context said first and second groups in accordance with their respective first and second weights.

In a particular embodiment, said method further comprises:
- displaying in a display area the first information related to the recognised text of the first portion of the handwritten text block.

In a particular embodiment, said method further comprises:
- determining a size of the display area;
wherein the size of the display area is used as input by the predictive model to define how many characters are outputted as the first information.

In a particular embodiment, said method further comprises:
- resizing the display area, from a first to a second size, in response to a user instruction;
- determining a maximum number of characters that can fit within the resized display area;
- obtaining updated information related to the recognised text of the first portion of the handwritten text block as an output of the predictive model using the recognised text of the second portion of the handwritten text bock as context of the recognised text of the first portion, wherein a number of characters of the updated information is adapted according to the determined maximum number; and
- replacing the first information by the updated information within the display area.

In a particular embodiment, said obtaining updated information related to the recognised text of the first portion of the handwritten text bloc comprises:
- generating a second prompt requesting for a second explanation, of the recognised text of the first portion of the handwritten text block, complying with the maximum number of characters using the recognised text of the second portion as context for generating said second explanation;
- transmitting said second prompt to the trained predictive model; and
- receiving, as output of the trained predictive model, the second explanation generated in accordance with said second prompt.

In a particular embodiment, said method further comprises:
- if the second size of the display area is larger than the first size, the updated information comprises more characters than said first information; and
- if the second size of the display area is smaller than the first size, the updated information comprises less characters than said first information.

According to a second aspect, the present invention relates to a computer readable program code (or computer program) including instructions for executing the steps of the method of the first aspect of the invention.

The different steps of the method of the first aspect may thus be defined by computer program instructions of a computer program. This computer program may be capable of being implemented in a computing device as defined hereafter, or more generally in a computer, this computer program comprising instructions adapted to the implementation of the steps of the method of the first aspect of the invention.

The computer program of the invention can be expressed in any programming language, and can be in the form of source code, object code, or any intermediary code between source code and object code, such that in a partially-compiled form, for instance, or in any other appropriate form.

According to a third aspect, the present invention relates to a non-transitory computer readable medium (or recording medium) having recorded thereon a computer readable program code (or computer program) of the second aspect of the invention.

In a particular embodiment, the invention relates to a non-transitory computer readable medium having a computer readable program code embodied therein, said computer readable program code being adapted to be executed to implement the method of the first aspect on a computing device, this computing device comprising a processor for executing the steps of the method of the first aspect.

The non-transitory computer readable medium previously mentioned can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

The non-transitory computer readable medium of the invention can correspond to a transmittable medium, such as an electrical or an optical signal, which can be conveyed via an electric or an optic cable, or by radio or any other appropriate means. The computer program according to the disclosure can in particular be downloaded from the Internet or a network of the like.

Alternatively, the non-transitory computer readable medium can correspond to an integrated circuit in which a computer program is loaded, the circuit being adapted to execute or to be used in the execution of the methods of the invention.

According to a fourth aspect, the invention relates to a computing device configured to implement the method according to the first aspect of the invention. More particularly, the present invention provides a computing device for processing an electronic document, comprising:
- a displaying module for displaying a handwritten text block contained in the electronic document;
- a detecting module for detecting a user selection, within the electronic document, of a first portion of the handwritten text block;
- a recognition module for recognizing as text content the selected first portion of the handwritten text block and a second portion, other than the selected first portion, of the handwritten text block by handwriting recognition based on said handwritten text block; and
- an obtaining module for obtaining first information related to the recognised text of the first portion of the handwritten text block as an output of a trained predictive model using the recognised text of the second portion of the handwritten text bock as context of the recognised text of the first portion.

The various embodiments defined above in connection with the method of the first aspect of the present invention apply in an analogous manner to the computing device, the computer program and the non-transitory computer readable medium of the present invention.

For each step of the method of the present invention as defined in the present disclosure, the computing device may comprise a corresponding module (or unit, or means) configured to perform said step.

In a particular embodiment, the invention may be implemented using software and/or hardware components. In this context, the term "module" can refer in this disclosure to a software component, as well as a hardware component or a plurality of software and/or hardware components.

The present invention advantageously allows for efficient interactions of a user with handwritten content in an electronic document. In particular, enhanced processing of handwritten content displayed in an electronic document can be achieved, thereby improving the user experience, for instance in a notetaking application. More particularly, thanks to the present invention, an accurate and reliable management of handwritten content in an electronic document can be achieved.

The present invention may allow to improve capabilities of a notetaking application, for instance to allow a user to handle interactive functions in an efficient and ergonomic manner, for instance using AI chatbots or the like.

### Brief description of the drawings

Other characteristics and advantages of the present disclosure will appear from the following description made with reference to the accompanying drawings which show embodiments having no limiting character. In the figures:
- figure 1 is a block diagram which schematically represents a computing device according to at least one particular embodiment of the invention;
- figure 2 is a block diagram which schematically represents modules implemented by the computing device of figure 1, according to at least one particular embodiment of the invention;
- figure 3 represents an electronic document comprising handwritten text according to at least one particular embodiment of the invention;
- figure 4 represents a user selection of a first portion of a handwritten text block in the electronic document of figure 3, according to at least one particular embodiment of the invention;
- figure 5 represents the electronic document of figure 3 being processed according to a method of at least one particular embodiment of the invention;
- figure 6 represents relevant information being displayed with respect to handwritten text in the electronic document of figure 3, according to at least one particular embodiment of the invention;
- figure 7 depicts steps of a method for processing an electronic document according to at least one particular embodiment of the invention;
- figure 8 depicts steps of a method for processing an electronic document according to at least one particular embodiment of the invention;
- figure 9 depicts steps of a method for processing an electronic document according to at least one particular embodiment of the invention;
- figure 10 represents an electronic document processed according to at least one particular embodiment of the invention;
- figure 11 represents an electronic document processed according to at least one particular embodiment of the invention;
- figure 12 represents an electronic document processed according to at least one particular embodiment of the invention;
- figure 13 represents an electronic document processed according to at least one particular embodiment of the invention; and
- figure 14 represents an electronic document processed according to at least one particular embodiment of the invention.

The components in the figures are not necessarily to scale, emphasis instead being placed upon illustrating the principles of the present invention.

For simplicity and clarity of illustration, the same reference signs will be used throughout the figures to refer to the same or analogous parts, unless indicated otherwise.

### Description of particular embodiments of the invention

In the following detailed description, numerous specific details are set forth by way of examples in order to provide a thorough understanding of the relevant teachings. However, it should be apparent to those skilled in the art that the present teachings may be practiced without such details. In other instances, well known method, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The terms "first(s)" (or first(s)), "second(s)", etc.) are used in this document by arbitrary convention to help identify and distinguish between different elements (such as operations, threshold values, etc.) implemented in the embodiments described below.

The terms "hand-drawing" and "handwriting" (and similarly the terms "hand-drawn" and "handwritten") are used interchangeably herein to define the creating of digital contents (handwriting input) by a user through use of his/her hands (or fingers) or any input device (hand-held stylus or digital pen, mouse...) on or with an input surface. The term "hand" or the like is used herein to provide concise description of the input techniques, however the use of other parts of a user's body for similar input is included in this definition, such as foot, mouth and eye.

Handwriting, or a handwritten content, are formed by strokes of digital ink input by a user who is also named the writer. A stroke (also called ink stroke or ink segment) is characterised by at least a stroke initiation location (corresponding to a "pen down" event), a stroke terminal location (corresponding to a "pen up" event), and the stroke path connecting the stroke initiation and the stroke terminal locations.

A handwritten content in the present disclosure is understood as comprising one or multiple symbols (or characters) created by a user through a process of handwriting.

The term "text" in the present disclosure is understood as encompassing all characters and the like (e.g. alphanumeric characters), and strings thereof, in any written language and, more generally, any symbols used in written text. Text thus includes for instance base characters and accents from any script, such as Latin scripts, Cyrillic scripts, Chinese scripts, and so on. Text may comprise one or a plurality of such symbols, and may be arranged in various manner such as in text lines, paragraph of multiple text lines, etc.

Furthermore, the examples described below and shown in the drawings are in a left-to-right written language context, bearing in mind that any reference to positions can be adapted for written languages having different directional formats.

The present invention provides a method, and a corresponding computing device and computer program, for processing an electronic document, and more particularly for processing a handwritten text block contained in such an electronic document. The invention involves a predictive model generating as output information related to a first portion of the handwritten text block, wherein a second portion of said handwritten text block, different from said first portion, is used as context by the predictive model for generating said output.

In particular, the method may comprise:
- displaying a handwritten text block contained in the electronic document;
- detecting user selection, within the electronic document, of a first portion of the handwritten text block;
- recognizing as text content the selected first portion of the handwritten text content and a second portion, other than the selected first portion, of the handwritten text block by handwriting recognition based on said handwritten text block; and
- obtaining first information related to the recognised text of the first portion of the handwritten text block as an output of a trained predictive model using the recognised text of the second portion of the text bock as context of the recognised text of the first portion.

The present invention advantageously allows for efficient interactions of a user with handwritten content in an electronic document. In particular, enhanced processing of handwritten content displayed in an electronic document can be achieved, thereby improving the user experience, for instance in a notetaking application.

More particularly, thanks to the present invention, an accurate and reliable management of handwritten text in an electronic document can be achieved. In particular, relevant information related to a user selected first portion of a handwritten text block in an electronic document can be advantageously obtained and managed. This is because the recognised text of the first portion (e.g. one or several words) may have a plurality of different possible meanings or interpretations, depending on the context in which said recognised text is used. Although the second portion of the handwritten text block is not part of the user selected first portion, it nevertheless undergoes handwriting recognition to serve as context for the predictive model's analysis of the recognised text of the first portion. Based on the recognised text of the second portion, more accurate and reliable information can be generated by the predictive model with respect to the recognised text of the first portion of the handwritten text block.

In particular, efficient control of a predictive model to obtain relevant information related to text can be achieved based on a prompt engineering solution, that is by causing generation of prompts which are send to the predictive model to obtain therefrom the most relevant result.

The predictive model may for instance provide a relevant explanation, or any other appropriate relevant information, related to the recognised text of the first portion of the handwritten text block.

Other aspects and advantages of the present invention will be apparent from the embodiments described below with reference to the drawings mentioned above.

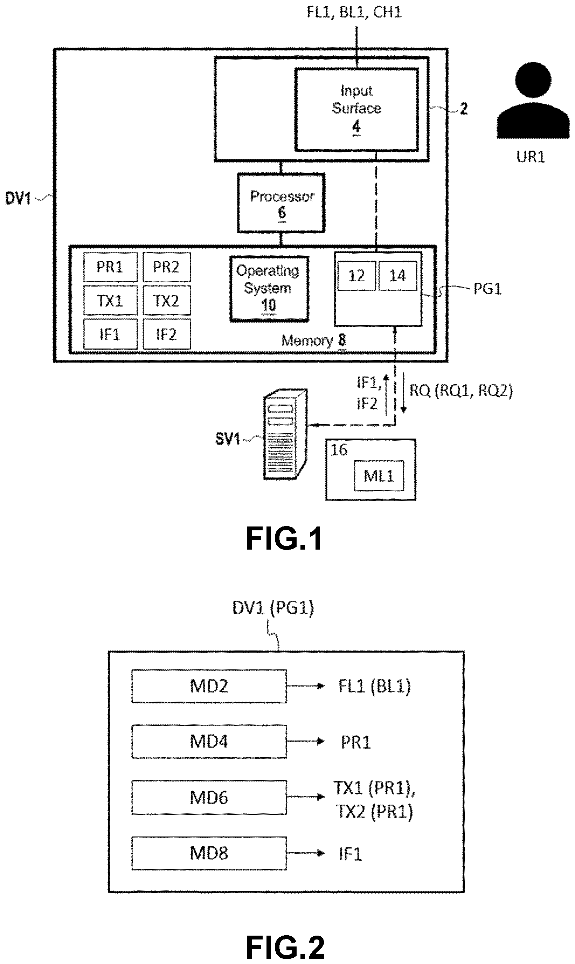

**Figure 1** depicts a computing device DV1 configured to process handwritten content according to particular embodiments. In the following, it is assumed that the computing device DV1 is used to process or manage an electronic document FL1 containing handwritten text, including at least a handwritten text block BL1 (also called handwritten text content BL1 or handwritten text BL1), by implementing a processing method according to particular embodiments of the invention. A user UR1 may use the computing device DV1 to interact with the electronic document FL1, and more particularly with the handwritten text block BL1.

The handwritten text, also named handwriting or digital handwriting, comprises strokes of digital ink. Each stroke may form a full character, part of a character, or a plurality of characters.

The format and content of the electronic document FL1, and more particularly of the handwritten text contained therein, may vary depending on each case. The handwritten text, including the handwritten text block BL1, may comprise handwritten text of any kind, and spatially arranged in various ways. In the following examples, it is assumed that the handwritten text block BL1 comprises a plurality of handwritten text characters CH1 forming words WD1. Each word WD1 comprises one or a plurality of handwritten characters CH1.

As described later, the handwritten text block BL1 may be arranged in text lines, each text line comprising at least one word, although other arrangements are possible.

The handwritten text contained in the electronic document FL1, including the handwritten text block BL1, may or may not be generated by the user UR1 by means of the computing device DV1. In a particular example, the computing device DV1 retrieves the electronic device FL1 from an internal memory or from outside. In another example, the user UR1 creates the electronic document FL1 using the computing device DV1.

The computing device (or processing device) DV1 may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or more generally any processing unit suitable to analyse handwritten content according to the method of the invention. The computing device DV1 may include components of at least one processing elements, some form of memory and input and output (I/O) devices. The components communicate with each other through inputs and outputs, such as connectors, lines, buses, links networks, or others known to the skilled person.

More specifically, the computing device DV1 may comprise an input surface 4 for handwriting a content such as the handwritten text block BL1. The input surface 4 is suitable to detect a plurality of strokes of digital ink entered on (or using) said input surface by a user UR1. Embodiments without such an input surface 4 are however also possible.

The input surface 4 may employ any appropriate technology such as resistive, surface acoustic wave, capacitive, infrared grid, infrared acrylic projection, optical imaging, dispersive signal technology, acoustic pulse recognition, or any other appropriate technology as known to the skilled person to receive user input in the form of a touch- or proximity-sensitive surface. The input surface 4 may be a non-touch sensitive surface which is monitored by a position detection system.

The computing device DV1 may comprises at least one display unit (or display device) 2 for outputting data from the computing device DV1 such as text handwriting BL1. The display unit 2 may be a screen or the like of any appropriate technology (LCD, plasma...). The display unit 2 is suitable to display strokes of digital ink input by the user UR1. Embodiments without such a display unit 2 are however also possible. The display unit 2 may be internal or external to the computing device DV1.

The input surface 4 may be co-located with the display unit 2 or remotely connected thereto. In a particular example, the display unit 2 and the input surface 4 are parts of a touchscreen.

As described further below in particular examples, the user UR1 may use any appropriate input interface of the computing device DV1 to select a first portion PR1 of the handwritten text block BL1 for which the user wishes to obtain relevant information IF1.

As depicted in figure 1, the computing device DV1 comprises a processor 6 and a memory 8. The computing device DV1 may also comprise one or more volatile storing elements (RAM, not shown) as part of the memory 8 or separate thereof.

The processor 6 is a hardware device for executing software, particularly software stored in the memory 8. The processor 8 can be any custom made or general purpose processor, a central processing unit (CPU), a semiconductor based microprocessor (in the form of microchip or chipset), a microcontroller, a digital signal processor (DSP), an application specific integrated circuit (ASIC), field programmable gate array (FPGA) or other programmable logic device, or any combination thereof, and more generally any appropriate processor component designed for executing software instructions as known to the skilled person.

The memory 8 is a non-transitory (or non-volatile) computer readable medium (or recording medium) in accordance with a particular embodiment of the invention. The memory 8 may include any combination of non-volatile storing elements (e.g. ROM, EPROM, flash PROM, EEPROM, hard drive, magnetic or optical tape, memory registers, CD-ROM, WORM, DVD, or the like). The non-volatile memory 8 is coupled to the processor 6, so that the processor 6 is capable of reading information from and writing information to the memory 8.

As show in the example of figure 1, the memory 8 includes an operating system (OS) 10 and a computer program (or application) PG1. The operating system 10 controls the execution of the computer program PG1. This computer program (or computer-readable program code) PG1 comprises instructions to implement a processing method according to particular embodiments of the invention.

The non-volatile memory 8 thus constitutes a recording medium (or information medium) according to particular embodiments of the present invention, having stored thereon the computer program PG1.

In the example shown in figure 1, the computer program (or application) PG1 comprises a handwriting recognition unit 12 and a prompt unit 14, although other examples are possible. In another example, the handwriting recognition unit 12 is implemented outside the computing device DV1.

The handwriting recognition unit 12 is configured to perform text handwriting recognition based on handwritten text, e.g. based on all or part of the handwritten text block BL1 of the electronic document FL1. Recognised text TX1 and TX2 may for instance be recognised by performing handwriting recognition by the handwriting recognition unit 12 based respectively on the selected first portion PR1 and a second, different, portion PR2 of the handwritten text block BL1, as further described below.

The prompt unit 14 is configured to interact with a predictive model ML1 by sending thereto prompts RQ and receiving therefrom information in response to these prompts RQ. A prompt RQ generated by the prompt unit 14 is configured to request, to the predictive model ML1, information relevant to handwritten text, e.g. the selected first portion PR1 of the handwritten text block BL1.

In the present example, the predictive model ML1 is executed by a machine learning (ML) artificial neural network 16 which is distant from (or outside) the computing device DV1. This artificial neural network 16 may be, or implemented by, an AI chatbot (or AI unit) with which the computing device DV1 can interact via prompts RQ (figure 1). For instance, the artificial neural network (or AI chatbot) 16 may be implemented by a server SV1 external to the computing device DV1 (figure 1), although other examples are possible where the predictive model ML1 is implemented by the computing device DV1 itself. By way of an example, the predictive model ML1 is a ChatGPT platform developed by OpenAI^{®}.

The server SV1 may comprise one or a plurality of servers, or may be cloud-based system, suitable to execute the predictive model ML1 as described in the present disclosure. For instance, the computing device DV1 may use an API (application programming interface) to remotely access and interact with the predictive model ML1. By way of an example, an appropriate API may be used by the computing device DV1 to cooperate with an AI predictive model (e.g. ChatGPT) from OpenAI^{®}.

In an alternative embodiment, the artificial neural network (or AI chatbot) 16 is implemented by the computer program PG1 in the computing device DV1.

The predictive model ML1 is trained to process text input provided by the computing device DV1. Based on a prompt RQ1 (figure 1) received from the computing device DV1, the predictive model ML1 may generate relevant information IF1 related to the selected first portion PR1 of the handwritten text block BL1. In response to such a prompt, the computing device DV1 may receive the relevant information IF1 from the predictive model ML1.

As shown in **figure 2** according to a particular embodiment, when running the computer program PG1 stored in the memory 8 (figure 2), the processor 6 may implement modules, namely: a displaying module MD2, a detecting module MD4, a recognition module MD6 and an obtaining module MD8.

The displaying module MD2 may be configured to displaying the handwritten text block BL1 contained in the electronic document FL1, i.e. using the display unit 2 of the computing device DV1 in the present example.

The detecting module MD4 may be configured to detect a user selection, within the electronic document FL1, of a first portion PR1 of the handwritten text block BL1. This user selection may be performed or received by any appropriate input interface of the computing device DV1.

The recognition module MD6 may be configured to recognise, as text content TX1 and TX2 respectively, the selected first portion PR1 of the handwritten text block FL1 and a second portion PR2 of the handwritten text block FL1. This second portion PR2 comprises handwritten text other than the selected first portion PR1. This second portion PR2 may for instance include one or a plurality of characters or words, of the handwritten text block BL1, which do not belong to the first portion PR1. The second portion PR2 may for instance comprise the first portion PR1 and additional, other, handwritten text (e.g. other words) of the handwritten text block BL1.

The recognition of the text context TX1 and TX2 is performed by handwriting recognition based on said handwritten text block FL1. This recognition module MD6 may be, or implemented by, the recognition unit 12. Any appropriate technique known to the skilled person may be used for performing such a handwriting recognition.

The obtaining module MD8 may be configured to obtain a first information IF1 related to the recognised text TX1 of the first portion PR1 of the handwritten text block BL1 as an output of the trained predictive model ML1 using the recognised text TX2 of the second portion PR2 of the text bock as context of the recognised text TX1 of the first portion PR1. To this end, the prompt unit 14 may be, or implementing by, the obtaining module MD8.

The computer program PG1 comprises instructions configuring the processor 6 to implement the above-mentioned modules MD2-MD8, in order to perform steps of the processing method of the invention, as described later in particular embodiments.

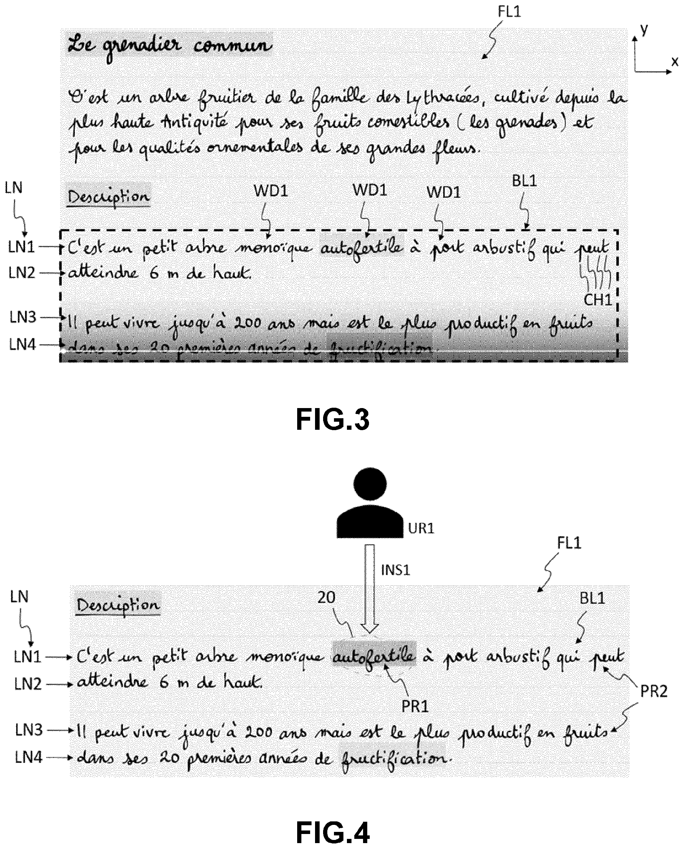

The configuration and operation of the modules MD2-MD8 of the computing device DV1 will be more apparent in the particular embodiments described hereinbelow with reference to the **figures 3-14****.** It is to be understood that the modules MD2-MD8 as shown in figure 2 represent only an example embodiment of the present invention, other implementations being possible.

For each step of the method of the present invention, the computing device DV1 may comprise a corresponding module configured to perform said step.

A method implemented by the previously discussed computing device DV1 of **figures 1-2** is now described with reference to **figures 3-14****,** in accordance with particular embodiments of the present invention. More specifically, the computing device DV1 implements this method by executing the computer program PG1 stored in the memory 8.

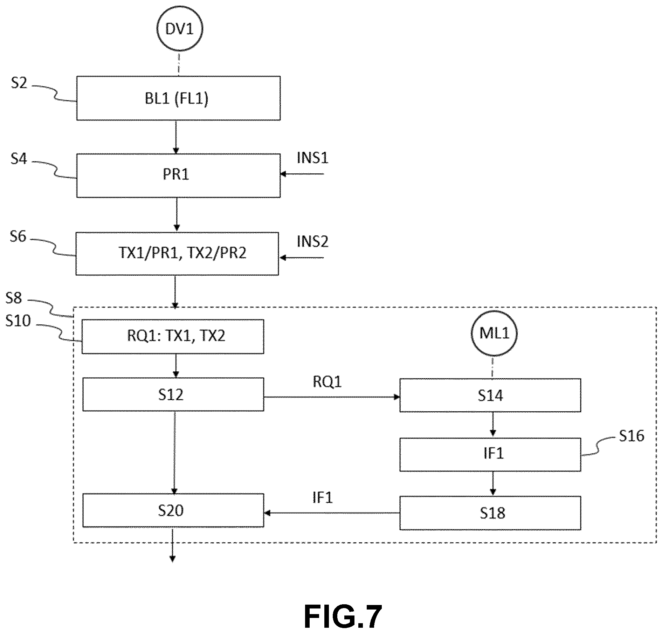

In a displaying step S2 (**figures 3** and **7**), the computing device DV1 displays a handwritten text block BL1 contained in an electronic document FL1. In the present example, the handwritten text block BL1 is displayed via the display unit 2 (figure 1). This display may for instance occur automatically or in response to a given user interaction with the computing device DV1.

As shown in the example of figure 3, the handwritten text block BL1 comprises handwritten text characters CH1 forming a plurality of words WD1 arranged in handwritten text lines LN, noted LN1-LN4. Each text line LN may comprise at least one word WD1 and each word WD1 may comprise at least one character CH1.

In a detecting step S4 (**figures 4** and **7**), the computing device DV1 detects a user selection, within the electronic document FL1, of a first portion PR1 of the handwritten text block BL1. This user selection may be received from the user UR1 from any appropriate user interface of the computing device DV1. The user selection may for instance be detected in response to a user gesture (or user interaction) INS1 detected by the computing device DV1 (e.g. via the input surface 4).

In a particular example shown in figure 4, the computing device DV1 determines or defines (S4, figure 7) a selection area 20 within the electronic document FL1 in response to a user gesture INS1, for instance by means of a "lasso" type selection function. The computing device DV1 then selects (S4), as the first portion PR1 of the handwritten text block BL1, each handwritten character CH1 (or each handwritten word WD1) of the handwritten text block FL1 at least partially contained within the selection area 20.

As shown in figure 4, it is assumed in the present example that the handwritten characters CH1 forming the word "autofertile" in the text line LN1 are selected (S4) as the first portion PR1 of the handwritten text block BL1.

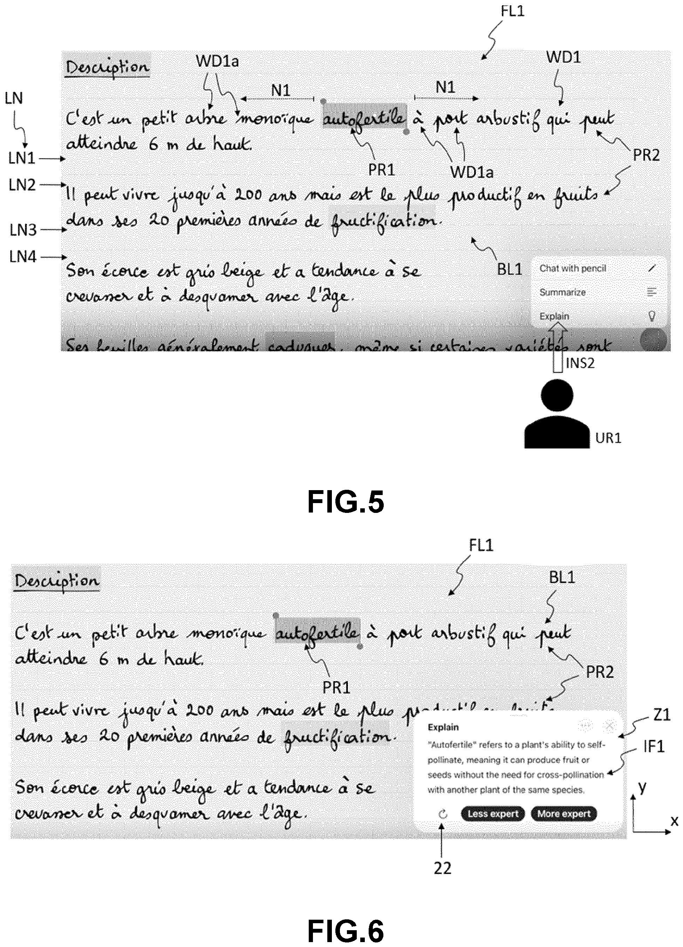

In a recognition step S6 (**figures 5** and **7**), the computing device DV1 recognises as text content the selected first portion PR1 of the handwritten text block BL1 and a second portion PR2, including handwritten text other than (distinct from) the selected first portion PR1, of the handwritten text block BL1. The recognition S6 of the first and second portions PR1 and PR2 is performed by handwriting recognition based on said handwritten text block BL1.

The second portion PR2 includes one or a plurality of characters CH1 or words WD1, of the handwritten text block BL1, which do not belong to (which are not part of) the first portion PR1. In other words, the second portion PR2 includes some handwritten text content that was not selected by the user in S4 (figure 7). This second portion PR2 may for instance comprise the first portion PR1 and additional, other, handwritten text (e.g. other words) of the handwritten text block BL1.

Recognition of the second portion PR2 (e.g. possibly the entire text block BL1), larger than the first portion PR1, allows for better recognition of individual words in the handwritten text block BL1. That is, the context of the handwritten text block BL1 may be used for providing scores to word candidates for each word of the handwritten text block BL1.

More particularly, a first text content TX1 is recognised (S6) by handwriting recognition of the selected first portion PR1 of the handwritten text block BL1. In the present example, the sequence of consecutive letters "a", "u", "t", "o", "f", "e", "r", "t", "i", "I" and "e" forming the word "autofertile" is detected by the recognition unit 12 (figure 1).

The second text context TX2 is also recognised (S6) by handwriting recognition of the second portion PR2 of the handwritten text block BL1. In the present example, the second portion PR2 comprises the user selection detected in step S4 of the first portion PR1, i.e. the handwritten text forming the word "autofertile". The second portion PR2 also comprises words WD1, of the handwritten text block BL1, other than the first portion PR1 (other than "autofertile").

This second portion PR2 may for instance comprise a plurality of words WD1 such as "arbre monoique autofertile à port", where "autofertile" corresponds to the first portion PR1 and the words "arbre monoïque" and "à port" correspond to other words WD1 of the handwritten text block BL1.

As indicated further below, this second portion PR2 is intended to be used as context of the first portion PR1 for later processing by the predictive model ML1. The content and extend of the part of the handwritten text block BL1 used as second portion PR2, that is as context of PR1, may be adapted depending on the case.

In a particular example, in the recognition step S6, the computing device DV1 selects, as part of the second portion PR2 of the handwritten text block BL1, at least one neighbouring handwritten word WD1a based on its proximity (or distance) within the handwritten text block BL1 with respect to the first portion PR1 (i.e. "autofertile" in this example) of the handwritten text block BL1 (figure 5). The computing device DV1 may select, as part of the second portion PR2, one or plural words WD1a, preceding and/or following the selected first portion PR1 within the handwritten text block BL1 (or within the same text line LN as PR1), for instance words adjacent or close to the first portion PR1.

In a particular example, each handwritten word WD1 (figures 5) having a position within the handwritten text block BL1 which satisfies a proximity criterion relative to the position of the selected first portion is selected (S6) as part of the second portion PR2. For example, each handwritten word WD1 separated by no more than N1 intermediate words in the handwritten text block with respect to the first portion PR1 is selected as a neighbouring word WD1a belonging to the second portion PR2, where N1 is a predefined integer equal to 0 or more (figure 5). In other words, N1 may define a maximum number of words WD1 positioned between the first portion PR1 and the neighbouring handwritten words WD1a. By way of an example, N1 may be comprised between 0 and 5.

For example, the handwritten characters forming the words "arbre monoïque" and "à part" before and after the first portion PR1 ("autofertile") are selected (S6) as neighbouring words WD1a in the second portion PR2. The recognised words TX2, i.e. "arbre monoïque autofertile à part", may thus serve as context of the recognised text TX1 of the first portion PR1, i.e. "autofertile". As can be seen, the recognised text TX1 is part of the recognised text TX2 since the first portion PR1 is part of the second portion PR2.

As already indicated, the handwritten text block BL1 may comprise a plurality of handwritten text line LN (i.e LN1-LN4 in this example), each handwritten text line comprising at least one handwritten word WD1 (figure 5). In a particular example, the one or more neighbouring handwritten words WD1a selected by the computing device DV1 belong to the same handwritten text line LN as the first portion PR1 of the handwritten text block (i.e. text line LN1 in this example).

In a particular example, the computing device DV1 selects (S6), as the second portion PR2 of the handwritten text block BL1, each handwritten text content (i.e. each handwritten word WD1) within the same handwritten text line LN (i.e. LN1 in this example) as the first portion PR1 of the handwritten text block BL1. In other words, the entire text line LN1 of the first portion PR1 may be selected as second portion PR2 for serving as context later for the predictive model ML1.

In a particular example, the computing device DV1 selects, as the second portion PR2 of the handwritten text block BL1, each handwritten text content (i.e. each handwritten word WD1) of the handwritten text block BL1. In other words, the entire handwritten text block BL1 may be selected as second portion PR2 for serving as context later for the predictive model ML1.

The larger the selected second portion PR2 is, the more words of the handwritten text block BL1 may be used for serving as context by the predictive model ML1, thereby improving accuracy and reliability of the output of the predictive model ML1. However, an efficient trade-off may be achieved by limiting the size of the second portion PR2 to save processing time and resources.

In an obtaining step S8 (**figures 6-7**), the computing device DV1 obtains first information IF1 related to the recognised text TX1 of the first portion PR1 of the handwritten text block BL1 as an output of the trained predictive model ML1 using the recognised text TX2 of the second portion PR2 of the handwritten text bock BL1 as context of the recognised text TX1 of the first portion PR1. In other words, the computing device DV1 uses the predictive model ML1 for determining relevant information IF1 with respect to the recognised text TX1. To this end, the recognised text TX2 of the second portion PR2 is provided as context to the predictive model ML1. Based on this context, the predictive model ML1 generates the information IF1 related to the first recognised text TX1 and provides it to the computing device DV1.

The first information IF1 may be of various nature depending on the case. In a particular example, the first information IF1 obtained in S8 comprises a first explanation of the first recognised text TX1. As illustrated in the example of figure 6, this explanation mays be a definition or interpretation of the recognised text TX1 of the first portion PR1 (i.e. an explanation of the meaning of the word "autofertile" in this example).

In a particular example, the first information IF1 comprises a translation of the recognised text TX1, for instance in a target language other than the initial language of the recognised text TX1.

In a particular example, the first information IF1 comprises a summary of the recognised text TX1. In a case for instance where the recognised text TX1 comprises a plurality of words or a plurality of sentences, the first information IF1 may usefully provide a summary to help the user quickly grasping the main information conveyed by this selected first portion, thereby facilitating the reading and/or learning process of the reader.

In the obtaining step S8, the computing device DV1 may advantageously rely on a prompt RQ1 to receive the first information IF1 from the predictive mode ML1. This technique of prompt generation allows the computing device DV1 to interact in an efficient manner with the predictive model ML1 to obtain the relevant information IF1 using the recognised text TX2 as contact of the recognised text TX1.

In a particular example shown in figure 7, the computing device DV1 may thus performs steps S10, S12 and S20 as part of the obtaining step S8.

More particularly, the computing device DV1 generates (S10) a first prompt RQ1 requesting for a first explanation (or first information) of the recognised text TX1 of the first portion PR1 using the recognised text TX2 of the second portion PR2 as context for said explanation. This prompt RQ1 is a request instructing the predictive model ML1 to provide relevant explanation relative to recognised text TX1 based on the recognised text TX2 serving as context. This prompt RQ1 is for instance generated by the prompt unit 12 (figure 1).

By way of an example, the first prompt RQ1 may define an instruction along the following lines: "provides an explanation of the word "autofertile" using "arbre monoique autofertile à port" as context. In this case, the recognised words "arbre monoïque" and "à port" are neighbouring words WD1a, of the first portion PR1, used as context for "autofertile".

The prompt RQ1 may comprise a plurality of requests, for instance two requests, sent sequentially (one after the other) by the computing device DV1 to the predictive model ML1 as the transmission step S12. For instance, the device DV1 may send to the predictive model ML1 a first request comprising the second portion PR2 as context and subsequently send a second request instructing the predictive model ML1 to return an explanation of the first portion PR1 using the second portion PR2 (already provided) as context.

The computing device DV1 then transmits (S12, figures 1 and 7) the first prompt RQ1 to the trained predictive model ML1. In the present example, this prompt RQ1 is thus transmitted to the AI chatbot 16 implemented by server SV1.

The predictive model ML1 receives (S14, figure 7) the prompt RQ1 and processes it (S16, figure 7) as input to generate the first information IF1 as output. In response to the prompt RQ1, the predictive model ML1 transmits (S18) the generated first information IF1 to the computing device DV1.

In a receiving step S20 (figure 7), the computing device DV1 receives, as output of the predictive model ML1, the first explanation IF1 generated in accordance with the first prompt RQ1.

Thanks to the present invention, prompts can be advantageously generated and sent to the AI chatbot 16 to obtain relevant information IF1 relative to the recognised text TX1 using the recognised TX2 as context. Such a prompt may be generated in a predefined format known to the AI chatbot 16.

The obtained first information IF1 may then be used by the computing device DV1 in various ways depending on the case. In a particular example, the computing device DV1 displays the first information IF1, for instance by means of the display unit 2 (figure 1). The first information IF1 may for instance be displayed in a display area Z1 as shown in figure 6. This display area Z1 may be a popup window (e.g. displayed on top of the electronic document FL1), although other display implementations are possible such as displaying the first information IF1 in part of an input area of a user interface (for instance of the notetaking application).

The present invention advantageously allows for efficient interactions of a user with handwritten content in an electronic document FL1. In particular, enhanced processing of handwritten content displayed in an electronic document FL1 can be achieved, thereby improving the user experience, for instance in a notetaking application.

More particularly, thanks to the present invention, an accurate and reliable management of handwritten content in an electronic document FL1 can be achieved. In particular, relevant information related to a user selected first portion of a handwritten text block in an electronic document can be advantageously obtained and managed. This is because the recognised text TX1 of the first portion PR1 (e.g. one or several words) may have a plurality of different possible meanings or interpretations, depending on the context in which said recognised text is used. Although the second portion PR2 of the handwritten text block BL1 is not part of the first portion PR2 selected by a user in step S4 (figure 7), it nevertheless undergoes handwriting recognition in step S6 (figure 7) to serve as context for the analysis by the predictive model ML1 of the recognised text TX1 of the first portion PR1. Based on the recognised text TX2 of the second portion PR2, more accurate and reliable information IF1 can be generated by the predictive model ML1 with respect to the recognised text TX1 of the first portion PR1 of the handwritten text block BL1.

In particular, efficient control of a predictive model ML1 to obtain relevant information related to text can be achieved based on a prompt engineering solution, that is, by causing generation of prompts which are send to the predictive model to obtain therefrom the most relevant result.

The predictive model ML1 may for instance provide a relevant explanation, or any other appropriate relevant information (a definition, interpretation, translation, etc.), related to the recognised text TX1 of the first portion PR1 of the handwritten text block BL1.

As described with reference to figure 7, the selection step S4 is performed before recognition step S6.

In a particular example, selection S4 is performed after the recognition step S6 (figure 7), or even after a conversion step (not shown in figure 7) in which the text TX1 and TX2 recognised in S6 is converted into respective typeset text.

In a particular example, as part of the recognition step S6 (figure 7), the first and second portion PR1 and PR2 are segmented into strokes (stroke segmentation) and each stroke may be segmented into one or a plurality of sub-strokes (not shown). To this end, it is determined for each stroke if it corresponds to all or part of one predefined character or to a plurality of predefined characters. If a stroke corresponds to only one character or a part thereof, then it is recognised as forming a single sub-stroke. If a stroke corresponds to a plurality of characters (i.e. a combination of at least two parts of respectively two different characters), then it is segmented into a plurality of sub-stroke, each sub-stroke corresponding to a respective character. In any case, each sub-stroke is tagged, i.e. it is associated with tag information comprising a recognised character, a recognised word and a corresponding line LN of the handwritten text block BL1. In other words, each sub-stroke is attributed a respective character, a respective word and a respective line of the handwritten text block BL1. This tag information may be stored by the computing device DV1 as a result of the recognition step S6, for later access and use for instance during the obtaining step S8.

The computing device DV1 may advantageously use this tag information obtained as part of the recognition step S6 to adapt the prompt RQ1 generated in S10 (figure 7), for instance to adapt the extend of the second portion PR2 that is provided as context to the predictive model ML1. For instance, the tag information may be used to identify which text portion of the second portion PR2 is to be used as context and provided to the predictive model ML1. As the tag information is acquired as part of the recognition process S6, it is ready to be used by the computing device DV1 for generating the prompt RQ1. The computing device DV1 may use the tag information to adapt the level of context that is needed, thereby further improving the accuracy and reliability of the invention.

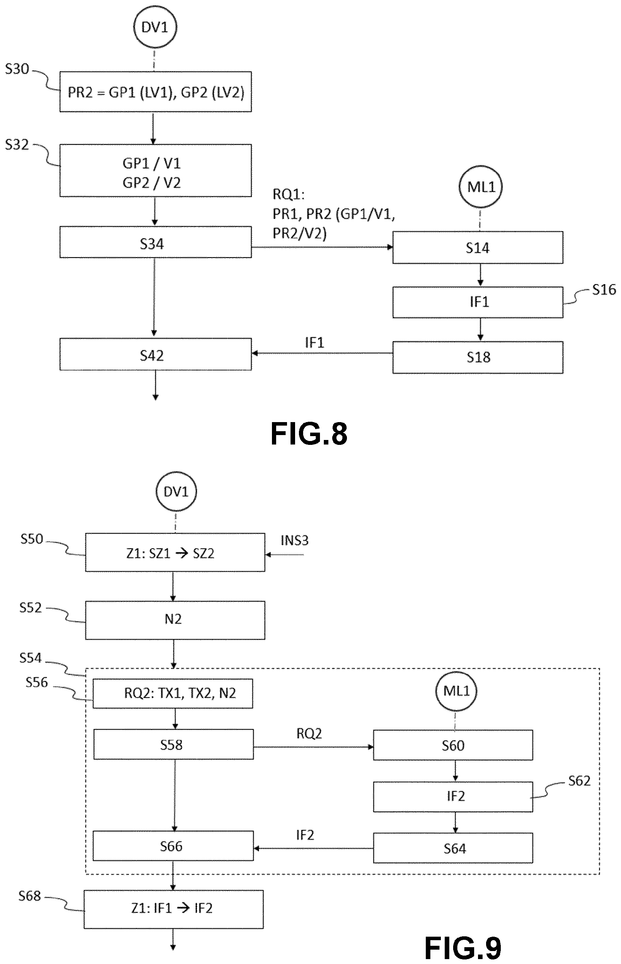

Various embodiments of the method of **figure 7** will now be described by way of examples with respect to **figures 8-14****.** To this end, the computing device DV1 may execute the computer program PG1 as shown in figure 1.

In a particular embodiment, different groups of the handwritten text block BL1 may be used as part of the second portion PR2, thereby serving as hierarchical context to the predictive model ML1 for generating the first information IF1. As part of the processing method, the computing device DV1 may thus transmit, to the trained predictive model ML1, as part of the second portion PR2, a plurality of groups hierarchically associated (or hierarchically linked), where each group comprises at least one handwritten word WD1 of the handwritten text block BL1.

In a particular example, the method of figure 7 may for instance comprise steps S30, S32, S34 and S42 performed by the computing device DV1 as shown in **figure 8****.**

More particularly, in an example shown in figure 8, the computing device DV1 selects (S30, figure 8), as part of the second portion PR2 of the handwritten text block BL1, at least two different groups (or text groups) of at least one handwritten word WD1, e.g. groups GP1 and GP2. Each selected group comprises at least one handwritten word WD1 of the handwritten text block BL1. The number of selected groups may be adapted depending on the case, and may be for instance of 2, 3 or more.

In an allocating step S32, the computing device DV1 allocates (or attributes) to respectively each group GP1-GP2 of the second portion PR2 a weight representative of its relevance (or importance) as context. By way of an example, the weights V1 and V2 are respectively attributed to the groups GP1 and GP2 determined in step S30.

The computing device DV1 then transmits (S34, figure 8) to the trained predictive model ML1, as part of the second portion PR2 of the handwritten text block BL1, said at least two groups along with their respective weights. In the present example, the groups GP1 and GP2 are transmitted to the predictive model ML1 in association with respectively the weights V1 and V2. In this case, the weights are explicit, which means that values of the weights are defined and provided to the predictive model ML1 to represent the respective level of importance of each group as context. As indicated further below, other embodiments with no provision of such values are also possible (implicit weight).

The predictive model ML1 receives in step S14 the groups GP1 and GP2 in association with respectively their weights V1 and V2, for instance via the prompt RQ1 generated and send by the computing device DV1. The predictive model ML1 then generates (S16, figure 8) the first information IF1 using as hierarchical context said at least two groups in accordance with their respective weights. In other words, the groups GP1 and GP2 in association with their respective weights V1 and V2 may serve as hierarchical context for the predictive model ML1, where the output of the predictive model ML1 is generated based on an importance of each group in accordance with its respective weight.

The first information IF1 generated by the predictive model ML1 is then transmitted (S18) to the computing device DV1, which receives it in receiving step S42.

The computing device DV1 then receives (S42, figure 8) the first information IF1 and may use this information as described in the present disclosure.

By using a plurality of groups of at least one handwritten words WD1 as context with various levels of importance, it is possible to improve even further the accuracy and reliability of the first information IF1 generated by the predictive model ML1. Portions of different sizes of the handwritten text block BL1 can be used to determine the first information IF1 with the most relevance.

The weight of a group may be defined for instance by an indicator (an attribute, an index, a value, etc.) attributed by the computing device DV1 to respectively each group GP1-GP2.

In a particular example, the groups GP1-GP2 are user selected as part of the second portion PR2 of the handwritten text block BL1, for instance in response to a user instruction from the user UR1. In a particular example, the groups GP1-GP2 are automatically selected by the computer device DV1, for instance based on predefined criteria (number/position of words, etc.).

In a particular example, the closer is located a selected group in the handwritten text block BL1 relative to the first portion PR1, the higher is the respective weight allocated to said selected group. In other words, a group relatively close to the first portion PR1 within the handwritten text block BL1 may be attributed a weight indicating a higher importance than another group positioned further away from the first portion PR1. This is because it can be assumed that characters or words relatively close to the first portion PR1 constitute a more relevant context than other characters or words further away from the first portion PR1.

For instance, a higher weight may be allocated to neighbouring handwritten characters CH1a belonging to the same line LN (e.g. LN1) as the first portion PR1 than to other handwritten characters CH1 belonging to another line LN (e.g. LN2-LN4) of the handwritten text block BL1.

In a particular example illustrated in figure 8, the computing device DV1 selects (S30), as part of the second portion PR2 of the handwritten text block BL1, a first group GP1 of at least one handwritten word WD1), including handwritten text other than the selected first portion FR1, defining a first level LV1 of context, this first group GP1 belonging to a same handwritten text line (e.g. LN1) as the first portion PR1.

The computing device DV1 also selects (S30), as part of the second portion PR2 of the handwritten text block BL1, a second group GP2 of second handwritten words WD1, including handwritten text other than the selected first portion PR1, defining a second level LV2 of context, this second group GP2 comprising the entire handwritten text block BL1.

The computing device DV1 allocates (S32, figure 8) first and second weights V1 and V2 to respectively the first and second groups GP1 and GP2, wherein the first weight V1 defines a higher relevance (or importance) as context than the second weight W2.

The computing device DV1 transmits (S34, figure 8) to the trained predictive model ML1, as part of the second portion PR2 of the handwritten text block BL1, the first and second groups GP1 and GP2 along with their respective first and second weights GP1 and GP2.

The first information IF1 is generated (S16, figure 8) by the predictive model ML1 using as hierarchical context the first and second groups GP1 and GP2 in accordance with their respective first and second weights V1 and V2. The first level LV1 of context may comprise one, several or all handwritten characters CH1, other than the first portion PR1, belonging to the same handwritten text line LN (e.g. LN1) as the first portion PR1. For instance, the two neighbouring words immediately preceding and the two neighbouring words immediately following the first portion PR1 within the same text line LN1 may be selected as the first group GP1 in association with the wight V1. The second level LV2 of context may comprise each text line LN (e.g. LN2-LN4) other than the one to which the first portion PR1 belongs.

In a particular example, one or a plurality of additional groups (in addition to GP1 and GP2), defining intermediate hierarchical levels of context between LV1 and LV2, may also be selected and used by the computing device DV1 to increase the level of details of the hierarchical context. In other words, the computing device DV1 may selects (S30, figure 8) more than two groups and process them in steps S32-S34 in an analogous manner as in the case where only two groups GP1 and GP2 are selected.

As described in the above examples with reference to figure 8, the weights V1-V2 can be explicit, which means that values of the weights are defined (S32, figure 8) by the computing device DV1 and provided (S34) to the predictive model ML1. Other embodiments are however possible where a context hierarchy is implicit, that is, it can be derived by the predictive model ML1 from the context PR2 provided by the computing device DV1, without the need for explicit values of weights as described above.

In a particular example, the computing device DV1 provides sequentially (i.e. one after the other), to the predictive model ML1, as the second portion PR2, groups (or text groups) of at least one handwritten word WD1 of the handwritten text block BL1. These different groups thus form together a sequence (or temporal sequence) of successive groups which is transmitted (S12, figure 7) to the predictive model ML1. The groups may for instance each comprise at least one handwritten word WD1 of the first portion PR1.

The sequence of groups may be transmitted by the computer device DV1 to the predictive model ML1 as the second portion PR2, i.e. as part of the prompt RQ1 (figures 7-8). As previously indicated, the prompt RQ1 may comprise a plurality of requests, for instance two requests, sent sequentially (one after the other) by the computing device DV1 to the predictive model ML1 as the transmission step S12. For instance, the device DV1 may send to the predictive model ML1 a first request comprising the sequence of groups as context (second portion PR2) and subsequently send a second request instructing the predictive model ML1 to return an explanation of the first portion PR1 using the sequence of groups (already provided) as context.

The different groups of the sequence are hierarchically associated (or hierarchically linked) with one another. In other words, the sequence order according to which are arranged the groups is representative of a hierarchical context of the first portion PR1. Each group comprises at least the subsequent group of the sequence. As a result, the number of words WD1 comprised respectively in the groups decreases over time through the sequence. In other words, the successive groups have a decreasing size (or word number) according to a reverse pyramid. Based on this sequence transmitted (S12) as the second portion PR2, the predictive model ML1 can determine a hierarchical context and use it (S16) for generating the information IF1 (e.g. an explanation) related to the first portion PR1.

The hierarchical structure of the groups (the groups contained in each other with a decreasing number of words) allows the predictive model ML1 to identify the most relevant context with a gradual accuracy. The predictive model ML1 may gradually focus on the recognised text TX1 of the first portion PR1 by analysing the context provided sequentially by the computing device DV1.

In a particular example, the entire handwritten text block BL1 is provided (S12, figure 7) as the second portion PR2, then a smaller portion (e.g., neighbouring lines or sentences, or neighbouring words), and so on. Going from a broader portion to a narrower portion advantageously allows the AI predictive model ML1 to focus on the most important aspects of the handwritten text block BL1 as context, thereby improving the final result.

Further, as indicated earlier, the first information IF1 obtained in S10 (figure 7) may be displayed by the computing device DV1, for instance in a display area Z1 (figure 6). This display area Z1 may be of various shape and dimensions depending on the case. The size of this display area Z1 may be adapted in accordance with the number of characters of the first information IF1 obtained in S10.

The size of the display area Z1 may be defined in various manners, for instance by the air od the display area Z1 (e.g. for dimension along x times dimension along y in figure 6) or at least one dimension of the display area Z1 (e.g. along x and/or y direction).

In a particular example, the computing device DV1 determines a size of the display area Z1. This size may be predefined in any suitable manner. The determined size of the display area Z1 is then used as input by the predictive model ML1 to define (or determine) how many characters are outputted (S16-S18) as the first information IF1. In other words, the computing device DV1 may transmit this determined size to the predictive model ML1 so that the latter adapts the length or extent of its output in terms of character number based on this determined size. This advantageously allows the first information IF1 obtained in S8 (figure 8) or S42 (figure 9) to perfectly fit into the display area Z1 of the determined size.

In a particular example shown in **figure 9****,** it is assumed that the first information IF1 is displayed in the display area Z1 having a first size Z1 (figure 6).

In a resizing step S50 (figure 9), the display area Z1 is resized by the computing device DV1 from the first size SZ1 to a second, different, size SZ2 in response to a user instruction INS3. This user instruction INS3 may be any instruction received from the user UR1 (e.g. as a user gesture on input surface 4) to trigger the resizing of the display area Z1. This resizing S50 may cause the size of the display area to increase or decrease, depending on the case (SZ1 >.SZ2 or SZ1 < SZ2).

In a determining step S52 (figure 9), the computing device DV1 determines a maximum number of characters N2 that can fit (or be contained) within the resized display area Z1. This determination S52 is based on the second size SZ2.

In an updating step S54 (figure 9), the computing device DV1 obtains updated information IF2 related to the recognised text TX1 of the first portion PR1 of the handwritten text block BL1 as an output of the predictive model ML1 using the recognised text TX2 of the second portion PR2 of the handwritten text bock BL1 as context of the recognised text TX1 of the first portion PR1. The number of characters of the updated information IF2 is adapted (or modified) according to the determined maximum number N2 determined in S52.

In other words, updated information IF2 related to the recognised text TX1 may be generated by the predictive model ML1 using as input the recognised text TX2 of the second portion PR2 (serving as context as in S10, figure 7) and the maximum number N2. The updated information IF2 may be different from the first information IF1, having in particular a larger or smaller number of characters than the first information IF1. In response to the user resizing (S50) the display area Z1 from the first size SZ1 to the second size Z1 and Z2, the AI chatbot 16 (figure 1) may re-generate relevant information with a difference level of detail (different number of characters), in accordance with the second size SZ2 of the display area Z1.

In a replacing step S68 (figure 9), the computing device DV1 replaces the first information IF1 by the updated information IF2 within the display area Z1. As a result, the resized display area Z1 containing the updated information IF2 is displayed.

It is thus advantageously possible for a user to increase or reduce the size of the display area Z1, thereby automatically causing the level of detail of the information contained therein to be adapted accordingly. It may also ensure an ergonomic display and easy access of the displayed information by the user.

In a particular example shown in figure 9, the updating step S64 comprises the steps S56, S58 and S66 performed by the computing device DV1.

More particular, the computing device DV1 generates (S30) a second prompt RQ2 requesting for a second explanation IF2, of the recognised text TX1 of the first portion PR1 of the handwritten text block BL1, complying with the maximum number N2 of characters using the recognised text TX2 of the second portion PR2 as context for generating said second explanation IF2. In other words, the prompt RQ2 instructs the predictive model ML1 to generate as second information IF2, an explanation of the recognised text TX1 using the recognised text TX2 as context, whereby the second information IF2 satisfies (is no longer than) the maximum number N2 of characters.

By way of an example, the second prompt RQ2 may define an instruction along the following lines: "rephrase the previous answer using N2 number of characters", where N2 is the maximum number of characters that may fit in the resized display area Z1 having the second size SZ2.

In a transmitting step S58 (figure 9), the computing device DV1 transmits the second prompt RQ2 to the predictive model ML1.

The predictive model ML1 receives (S60, figure 9) the prompt RQ2 and processes it (S62, figure 9) as input to generate the updated information IF2 as output. In response to the second prompt RQ2, the predictive model ML1 transmits (S64) the generated updated information IF2 to the computing device DV1.

In a receiving step S66 (figure 9), the computing device DV1 receives, as output of the predictive model ML1, the updated explanation IF2 generated in accordance with the second prompt RQ2.

The computing device DV1 may then replace (S68) the first information IF1 by the updated information IF2 within the display area Z1 as previously described.

In a particular example, the updated information IF2 is generated in S62 (figure 9) such that:
- if the second size SZ2 of the display area Z1 is larger than the first size SZ1, the updated information IF2 comprises more characters than said first information IF1; and
- if the second size SZ2 of the display area Z1 is smaller than the first size SZ1, the updated information IF2 comprises less characters than said first information IF2.

As previously described, the predictive model ML1 may be configured to generate the updated information IF2 having a number of characters complying with the maximum number N2 (figure 9). This advantageously allows the length (or level of detail) of the displayed information to be adapted to fit in the display area Z1 when resizing is undergone.

It should be noted, however, that the concept of adapting the number of characters of the output of the predictive model ML1 is not limited to the above embodiments. In particular, such an adaptation may be performed for any output generated by a predictive model such as the predictive model ML1.

More generally, each time an information related to a text is generated as output by the predictive model ML1 in response to a prompt from the computing device DV1, said information may be adapted in terms of its number of characters in accordance with the size of a display area in which said information is displayed.

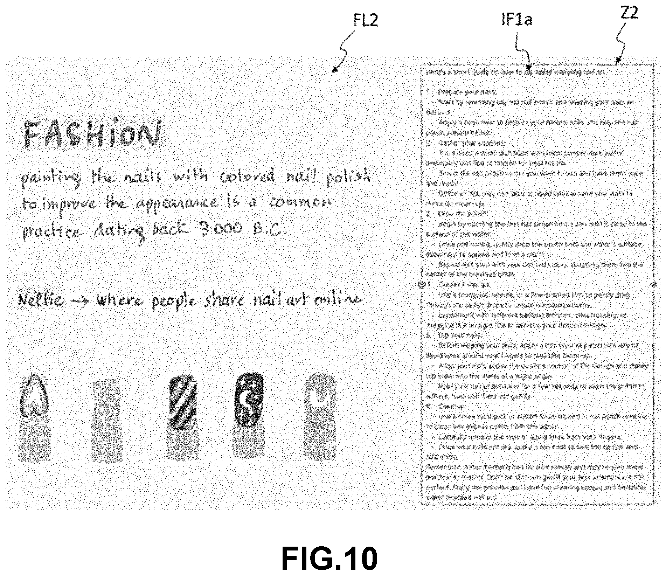

As shown in **figure 10****,** the computing device DV1 may for instance send a prompt requesting the predictive model ML1 to provide an explanation related to a word or a phrase, for instance "nail art techniques", which may or may not be part of an electronic document. This word or phrase may be input by a user, for instance as handwriting which is recognised by the computing device DV1 by handwriting recognition. In response to this prompt, the predictive model ML1 may generate an explanation IF1a which is transmitted to the computing device DV1. This explanation IF1a may then be displayed by the computing device DV1, for instance in a display area Z2 in an electronic document FL2. The length of the explanation IF1a being displayed may then be adapted upon resizing the display area Z2, in an analogous manner as in steps S50-S68 (figure 9).

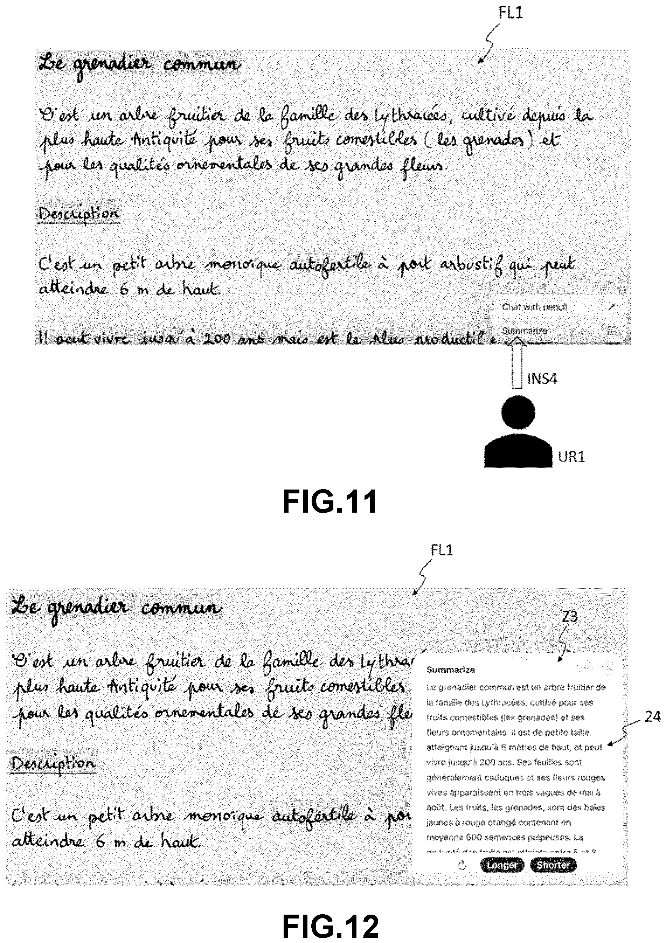

In a particular example shown in **figure 11****,** the computing device DV1 may detect an instruction INS4 from a user UR1 while at least part of an electronic document (e.g. FL1) is being displayed. In response to this user instruction INS4, the computing device DV1 may generate and send a prompt to the predictive model ML1, thereby causing generation of a summary 24 of the content of the electronic document (or at least part thereof). As shown in **figure 12****,** this summary 24 may then be displayed in a display area Z3 of the electronic document.

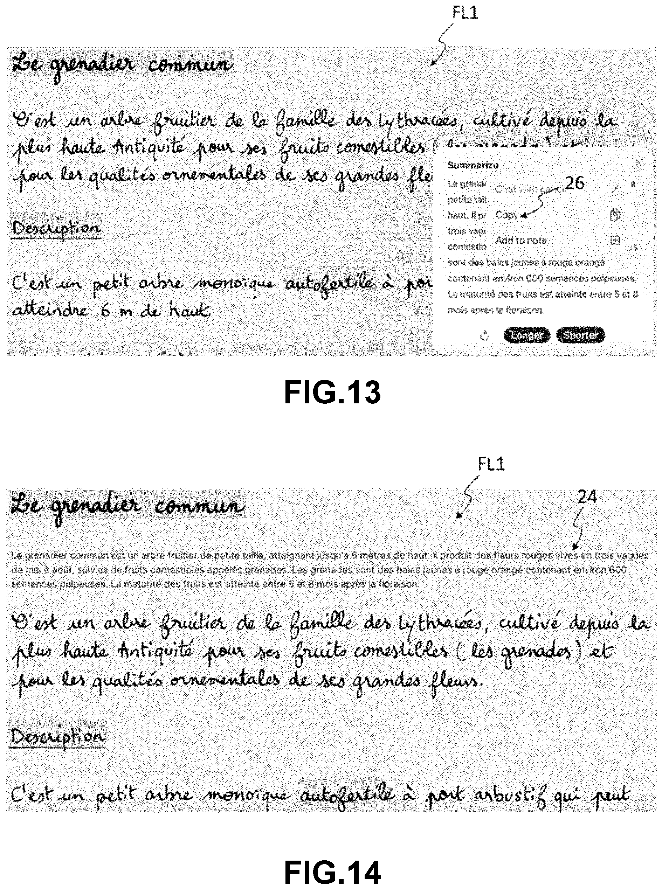

As shown in **figures 13-14****,** a user may then instruct the computing device DV1 to copy the summary 24 (e.g. by activating the option 26 "Copy" displayed by the computing device DV1) and paste it at a given location within the electronic document, for instance at a location selected by the user (e.g. below the title "Le grenadier commun"). A user may thus efficiently manage an electronic document by incorporating a relevant summary of all or part of the electronic document at an appropriate location in said document.

While not explicitly described, the present embodiments may be employed in any combination or sub-combination thereof. This disclosure having been described in particular embodiments, it is clear that it is susceptible to numerous modifications and embodiments are possible within the scope defined by the scope of the following claims.

## Claims

1. A computer-implemented method for processing an electronic document (FL1), comprising:
- displaying (S2) a handwritten text block (BL1) contained in the electronic document;
- detecting (S4) a user selection, within the electronic document, of a first portion (PR1) of the handwritten text block;
- recognizing (S6) as text content (TX1, TX2) the selected first portion (PR1) of the handwritten text block and a second portion (PR2), including handwritten text other than the selected first portion, of the handwritten text block (BL1) by handwriting recognition based on said handwritten text block; and
- obtaining (S8) first information (IF1) related to the recognised text (TX1) of the first portion (PR1) of the handwritten text block as an output of a trained predictive model (ML1) using the recognised text (TX2) of the second portion (PR2) of the handwritten text bock as context of the recognised text (TX1) of the first portion.

2. The method of claim 1, wherein said detecting (S4) a user selection comprises:
- determining a selection area (20) within the electronic document (FL1) in response to a user gesture (INS1); and
- selecting, as the first portion (PR1) of the handwritten text block, each handwritten character (CH1) of the handwritten text block at least partially contained within the selection area.

3. The method of claim 1 or 2, wherein said recognizing (S6) as text content the selected first portion (PR1) of the handwritten text content and a second portion comprises:
- selecting, as part of the second portion (PR2) of the handwritten text block, at least one neighbouring handwritten word (CH1a) based on its proximity within the handwritten text block with respect to the first portion of the handwritten text block.

4. The method of claim 3, wherein the handwritten text block (BL1) comprises a plurality of handwritten text lines (LN), each handwritten text line comprising at least one handwritten word (WD1),
wherein said at least one neighbouring handwritten word (CH1a) belongs to a same handwritten text line (LN1) as the first portion (PR1) of the handwritten text block.

5. The method of any one of the preceding claims, wherein the method comprises:
- selecting the entire handwritten text block (BL1) as the second portion (PR2).

6. The method of any one of the preceding claims, wherein the first information (IF1) comprises a first explanation of said recognised text.

7. The method of claim 6, wherein said obtaining (S8) first information comprises:
- generating (S10) a first prompt (RQ1) requesting for a first explanation of the recognised text (TX1) of the first portion (PR1) using the recognised text (TX2) of the second portion (PR2) as context for said explanation;
- transmitting (S12) said first prompt to the trained predictive model (ML1) ; and
- receiving (S14), as output of the trained predictive model, the first explanation (IF1) generated in accordance with said first prompt.

8. The method of any one of the preceding claims, wherein the method comprises transmitting, to the trained predictive model (ML1), as the second portion of the handwritten text block, a sequence of groups of at least one word (WD1) of the handwritten text block (BL1), wherein the groups of said sequence are hierarchically associated so that each group comprises at least the subsequent group of the sequence.

9. The method of any one of the preceding claims, wherein the method comprises:
- selecting (S30), as part of the second portion (PR2) of the handwritten text block, at least two different groups (GP1, GP2) of at least one handwritten word (WD1) in the handwritten text block;
- allocating (S32) to respectively each group of the second portion a weight (V1, V2) representative of its relevance as context; and
- transmitting (S34) to the trained predictive model (ML1), as part of the second portion of the handwritten text block, said at least two groups along with their respective weights;
wherein said first information (IF1) is generated by the trained predictive model using as hierarchical context said at least two groups (GP1, GP2) in accordance with their respective weights (V1, V2).

10. The method of claim 9, wherein the method comprises:
- selecting (S30), as part of the second portion of the handwritten text block, a first group (GP1) of at least one handwritten character, other than the selected first portion, defining a first level of context, said first group belonging to a same handwritten text line as the first portion;
- Selecting (S30), as part of the second portion of the handwritten text block, a second group (GP2) of at least one second handwritten character, other than the selected first portion, defining a second level of context, said second group comprising the entire handwritten text block;
- allocating (S32) first and second weights (V1, V2) to respectively the first and second groups (GP1, GP2), wherein the first weight defines a higher relevance as context than the second weight;
- transmitting (S34) to the trained predictive model (ML1), as part of the second portion of the handwritten text block, said first and second groups along with their respective first and second weights;
wherein said first information (IF1) is generated by the trained predictive model using as hierarchical context said first and second groups (GP1, GP2) in accordance with their respective first and second weights (V1, V2).

11. The method of any one of the preceding claims, wherein said method further comprises:
- displaying in a display area (Z1) the first information (IF1) related to the recognised text (TX1) of the first portion of the handwritten text block.

12. The method of claim 11, wherein said method further comprises:
- resizing (S50) the display area (Z1), from a first to a second size (SZ1, SZ2), in response to a user instruction (INS3);
- determining (S52) a maximum number (N2) of characters that can fit within the resized display area (Z1);
- obtaining (S54) updated information (IF2) related to the recognised text (TX1) of the first portion (PR1) of the handwritten text block (BL1) as an output of the predictive model (ML1) using the recognised text (TX2) of the second portion (PR2) of the handwritten text bock as context of the recognised text of the first portion, wherein a number of characters of the updated information is adapted according to the determined maximum number (N2); and
- replacing the first information (IF1) by the updated information (IF2) within the display area.

13. The method of claim 12, wherein said obtaining (S54) updated information related to the recognised text of the first portion of the handwritten text bloc comprises:
- generating (S56) a second prompt (RQ2) requesting for a second explanation, of the recognised text (TX1) of the first portion (PR1) of the handwritten text block, complying with the maximum number (N2) of characters using the recognised text (TX2) of the second portion as context for generating said second explanation;
- transmitting (S58) said second prompt (RQ2) to the trained predictive model (ML1);
and
- receiving (S66), as output of the trained predictive model, the second explanation generated in accordance with said second prompt (RQ2).

14. A computer program (PG1) including instructions for executing the steps of a method for processing an electronic document according to any one of the preceding claims when said program is executed by a computer.

15. A computing device (DV1) for processing an electronic document (FL1), comprising:
- a displaying module (MD2) for displaying a handwritten text block (BL1) contained in the electronic document;
- a detecting module (MD4) for detecting a user selection, within the electronic document, of a first portion (PR1) of the handwritten text block;
- a recognition module (MD6, 12) for recognizing as text content the selected first portion of the handwritten text block and a second portion (PR2), other than the selected first portion, of the handwritten text block by handwriting recognition based on said handwritten text block; and
- an obtaining module (MD8, 14) for obtaining first information (IF1) related to the recognised text (TX1) of the first portion of the handwritten text block as an output of a trained predictive model (ML1) using the recognised text (TX2) of the second portion of the handwritten text bock as context of the recognised text of the first portion.
